# FASCICULE DE BREVET EUROPEEN

(11) **EP 3 212 918 B1**
(45) Date de publication et mention de la délivrance du brevet: **21.03.2018**
(21) Numéro de dépôt: 15791713.9
(22) Date de dépôt: 23.10.2015
(51) Int. Cl.: F02K 1/82, F02C 7/24

(54) **ENSEMBLE D'UNE STRUCTURE FIXE INTERNE DE NACELLE DE TURBORÉACTEUR ET D'UNE PROTECTION THERMIQUE**
ANORDNUNG EINER FIXEN INNENSTRUKTUR EINER GONDEL EINES STRAHLTRIEBWERKS UND EINEM THERMISCHEN SCHUTZELEMENT
ASSEMBLY OF AN INNER FIXED STRUCTURE OF A NACELLE OF A TURBOFAN ENGINE AND A THERMAL PROTECTION ELEMENT

(30) Priorité: 24.10.2014 FR 1460261
(43) Date de publication de la demande: 06.09.2017
(73) Titulaire: Safran Nacelles, 76700 Gonfreville-l'Orcher (FR)
(72) Inventeur: BELLET, François, F-76700 Gonfreville L'Orcher (FR); RENAULT, Cédric, F-76700 Gonfreville L'Orcher (FR)
(74) Mandataire: Gaillarde, Frédéric F. Ch.
(86) Numéro de dépôt international: PCT/FR2015/052853
(87) Numéro de publication internationale: WO 2016/062977

(56) Documents cités:
- EP-A1- 2 738 470
- EP-A2- 1 296 090
- US-A- 4 820 097
- US-A1- 2008 112 796
- US-A1- 2014 133 964

## Description

La présente invention se rapporte à l'agencement de protections thermiques sur une structure interne fixe d'une nacelle de turboréacteur.

Un avion est mû par un ou plusieurs turboréacteurs logés chacun dans une nacelle. Une nacelle présente généralement une structure sensiblement tubulaire comprenant une entrée d'air en amont du turboréacteur, un ensemble intermédiaire destiné à entourer une soufflante du turboréacteur et un ensemble arrière pouvant intégrer des moyens d'inversion de poussée et destiné à entourer la chambre de combustion et tout ou partie des étages de compresseur et de turbine du turboréacteur, et est généralement terminée par une tuyère d'éjection dont la sortie est située en aval du turboréacteur.

Les nacelles modernes sont destinées à abriter un turboréacteur double flux apte à générer, d'une part, un flux de gaz chauds (également appelé flux primaire) issu de la chambre de combustion du turboréacteur et circulant dans un espace délimité par un compartiment de forme sensiblement tubulaire appelé compartiment « core », et d'autre part, un flux d'air froid (dit flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux sont éjectés du turboréacteur par l'arrière de la nacelle.

Le compartiment « core » comprend une enveloppe externe servant de carter et appelée structure fixe interne (IFS : Internai fixed Structure).

Cette structure interne fixe est soumise à de fortes contraintes thermiques et il est nécessaire de la protéger à l'aide de panneaux de protection thermique, permettant notamment d'isoler les composants de la nacelle de l'environnement moteur afin de les maintenir à des températures acceptables et ainsi prolonger leur durée de vie.

Ces protections thermiques assurent également une protection anti-feu et peuvent être utilisées dans d'autres zones de la nacelle, au niveau desquelles existe un risque d'incendie.

Afin de protéger thermiquement l'IFS, il est connu d'avoir recours à des panneaux de protection, disposés par exemple du côté compartiment « core », et comprenant au moins un matelas isolant, généralement fabriqué à partir de fibres de silice, de céramique ou d'un matériau microporeux, ledit matelas étant pris entre des feuillards généralement en inox.

Les matelas de protection thermique sont fixés à l'IFS à l'aide de systèmes de fixation qui coopèrent ponctuellement avec l'IFS sur toute la surface de protection, à la manière de rivets. La protection thermique est également retenue à l'IFS au niveau des bords par des bandes de retenue appelées communément « retainers ».

Un exemple de système de fixation connu est décrit dans le document FR 2 829 811.

Un tel système de fixation utilise un système de fil frein et comprend généralement deux parties, à savoir une embase fixée dans l'IFS et portant une structure d'accroché (par exemple de type crochet, passant ou pion à oeillets) et un bouton de retenue. La structure d'accroché se dresse à l'intérieur d'une ouverture de fixation correspondante du matelas, et est apte à recevoir un lien dénommé fil frein. Le bouton de retenue vient en appui contre une surface extérieure du matelas de manière à former une rondelle de maintien et de serrage, le bouton de retenue étant pourvu d'orifices de passage du fil frein dont les extrémités sont torsadées et serrées.

La retenue du panneau sur l'IFS est ainsi assurée.

Afin de parfaire la fixation, l'extrémité torsadée du fil frein est ensuite noyée dans du silicone.

En variante, le système de fil frein peut être remplacé par une structure d'accroché filetée ou taraudée coopérant avec une extrémité complémentaire du bouton de retenue.

De manière générale, les systèmes de fixation connus ne permettent pas de garantir un refroidissement suffisant au niveau des points d'attaches. C'est dû en particulier au fait que les structures d'accroché constituent des ponts thermiques, et ce d'autant plus que les structures d'accroché sont généralement fabriquées dans un matériau métallique. Pour pallier ce problème, il est généralement prévu d'augmenter l'isolation, soit en augmentant l'épaisseur du matelas soit en réalisant celui-ci dans un matériau contribuant à une isolation plus performante. Ces solutions ne sont toutefois pas satisfaisantes en termes de performances et de coût. De plus, augmenter l'épaisseur du matelas n'est pas toujours possible.

Des documents US 2008/0112796 A1 et US 2017/0133964 A1, on connaît d'autres systèmes de fixation. La présente invention vise à résoudre les inconvénients exposés ci-dessus et à améliorer les systèmes connus.

Elle concerne à cet effet un ensemble selon la revendication 1 d'une structure interne fixe d'une nacelle de turboréacteur et d'une protection thermique, ladite structure comportant une face interne, sur laquelle est rapportée la protection thermique, et une face externe, constituant une portion de la surface interne d'une veine de flux froid, l'ensemble étant caractérisé en ce qu'au moins un canal met en communication fluidique la face interne et la face externe de la structure.

Ainsi, en permettant de réaliser une amenée d'air frais en provenance de la veine d'air froid de la nacelle, les passages d'air conformes à l'invention procurent le refroidissement voulu des zones entourant les points d'attache de la protection thermique. On évite ainsi de devoir augmenter l'épaisseur ou la qualité de l'isolant constituant le matelas de protection thermique.

Suivant d'autres caractéristiques de l'ensemble selon l'invention :
- la structure interne comporte une peau interne et une peau externe pourvue de perforations acoustiques, la peau interne et la peau externe encadrant une âme alvéolaire ;
- la protection thermique est rapportée sur la peau interne de la structure interne fixe, ledit canal comportant au moins un trou traversant ménagé dans la peau interne ;
- la protection thermique est fixée à la structure interne fixe par au moins un dispositif de fixation comprenant une embase de fixation solidaire de la structure interne fixe, ladite embase de fixation comportant un conduit interne traversant la peau interne et formant ledit canal ;
- l'embase de fixation comporte une structure d'accrochage d'un lien de retenue de la protection thermique, la structure d'accrochage comportant un trou traversant formant le conduit interne ;
   suivant une autre caractéristique optionelle de l'ensemble selon l'invention:
   - le trou traversant débouche dans un deuxième trou traversant formant un passant pour le lien de retenue.

La présente invention se rapporte également à une nacelle d'un turboréacteur d'un aéronef, comportant un ensemble d'une structure fixe interne et d'une protection thermique tel que défini ci-dessus.

Enfin, l'invention se rapporte à un ensemble propulsif d'aéronef comportant une nacelle telle que défini ci-dessus et un turboréacteur logé dans la nacelle. La présente invention sera mieux comprise à la lecture de la description détaillée qui suit, faite en référence aux dessins annexés, parmi lesquels :
- la figure 1 est une vue en coupe longitudinale d'un ensemble propulsif d'aéronef ;
- la figure 2 est un premier exemple de réalisation de l'invention ;
- la figure 3 est un deuxième exemple de réalisation de l'invention.

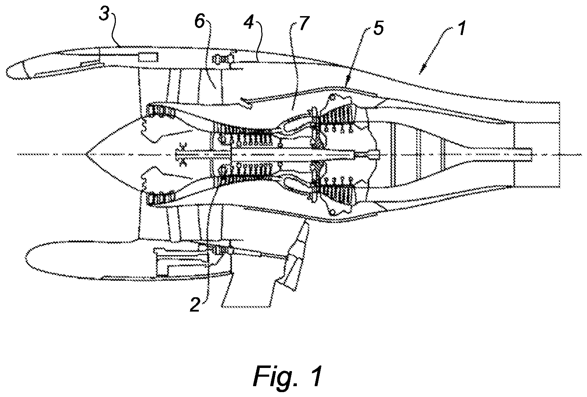

La figure 1 est une vue en coupe longitudinale d'un ensemble propulsif 1 d'aéronef, comportant un turboréacteur 2 logé dans une nacelle 3. La nacelle 3 comporte une structure fixe externe 4 (ou OFS pour « Outer Fixed Structure ») et une structure fixe interne 5 (ou IFS pour « Inner Fixed Structure »). Ces deux structures sont concentriques et définissent une veine 6 dans laquelle circule de l'air froid lorsque le turboréacteur 2 est en fonctionnement. La structure fixe interne 5 constitue l'enveloppe externe du compartiment « core » 7 du turboréacteur 2.

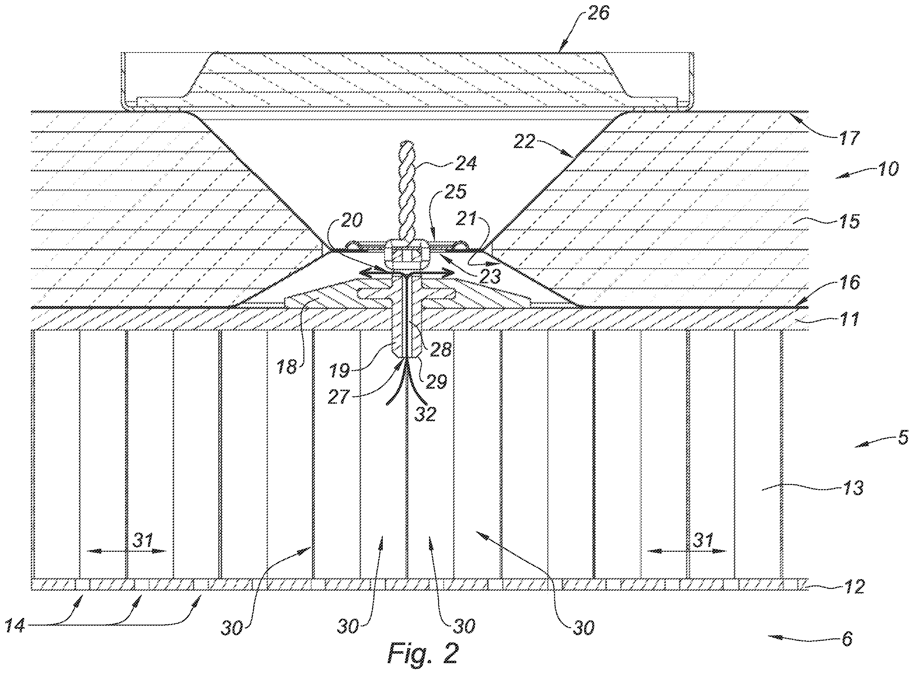

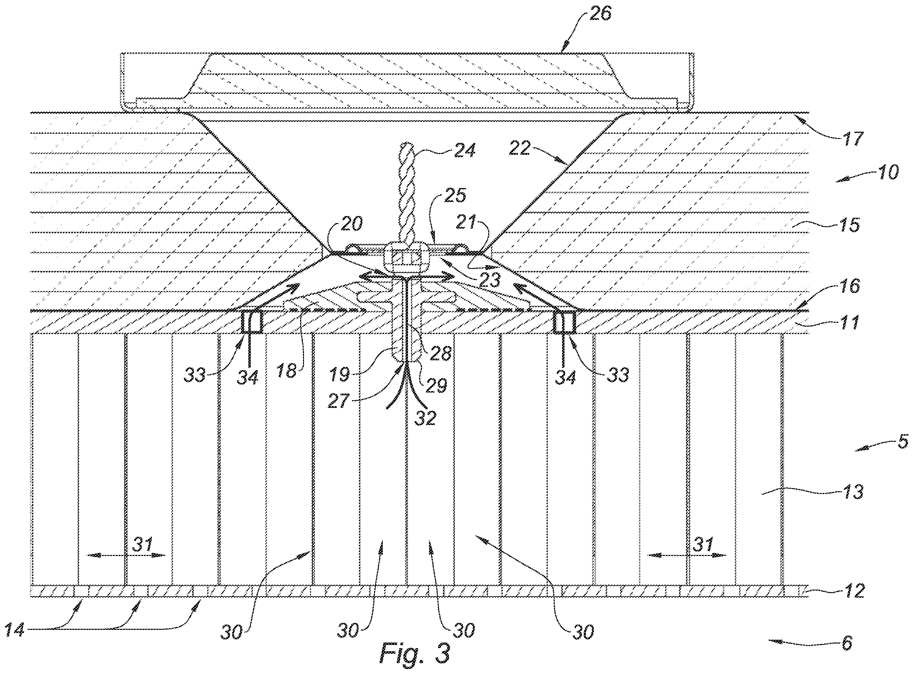

Les figures 2 et 3 représentent une vue en coupe longitudinale d'une portion d'une structure 5 fixe interne (ou IFS) d'une nacelle de turboréacteur, sur laquelle est fixée une protection thermique 10. L'IFS 5 est constituée dans l'exemple d'un ou plusieurs panneaux sandwich, comportant une peau interne 11, dite peau support, et une peau externe 12. Dans l'exemple, la peau interne 11 et la peau externe 12 encadrent une âme alvéolaire 13, par exemple une structure métallique de type nid d'abeilles. La peau externe 12 constitue une portion de la surface interne de la veine 6. La peau externe 12 présente dans l'exemple une pluralité de perforations 14 dites perforations acoustiques.

La protection thermique 10 comporte un matelas 15 de protection thermique. Le matelas 15 comporte une face en contact avec l'IFS 5, dite face interne 16, et une face opposée, dite face externe 17. Dans l'exemple, les faces interne 16 et externe 17 du matelas 15 sont recouvertes par des tôles métalliques.

Le matelas 15 est fixé à l'IFS 5 au moyen d'une pluralité de systèmes de fixation. Chaque système comprend une embase 18 de fixation. Cette embase 18 est fixée à la peau interne de l'IFS 5, par exemple par collage, et est équipée d'une structure d'accrochage 19. Dans l'exemple, la structure d'accrochage 19 se présente sous la forme d'un piton à oeittet 20 faisant saillie selon une direction sensiblement normale à la surface de la peau interne 11 sur laquelle l'embase 18 est rapportée.

Le matelas 15 de protection thermique vient recouvrir l'embase 18 et comporte à cet effet une ouverture 21, ménagée dans l'épaisseur du matelas 15. Dans l'exemple, l'ouverture 21 est constituée par un évidement de forme tronconique dont la section la plus grande est celle située au niveau de la face interne 16 du matelas 15.

Du côté du matelas 15 opposé à l'ouverture 21 est disposé un évidement 22, ménagé dans l'épaisseur du matelas et débouchant sur la face externe 17 du matelas 15. L'évidement 22 communique avec l'ouverture 21 de manière à former un passage au travers du matelas 15, afin de permettre, comme on le verra plus bas, à un fil frein 24 de traverser le matelas 15. L'évidement 22 permet d'offrir à un opérateur une accessibilité améliorée à la structure d'accrochage 19. Dans ce but, l'évidement 22 présente dans l'exemple de la figure 2 une forme évasée, la plus grande section de l'évidement 22 se situant ainsi au niveau de la face externe 17 du matelas 15. Avantageusement, comme représenté sur la figure 2, la forme évasée de l'évidement 22 est une forme tronconique.

L'ouverture 21 et l'évidement 22 communiquent par l'intermédiaire d'un orifice 23 situé au droit de la structure d'accrochage 19. Avantageusement, la section de l'orifice 23 est aussi réduite que possible, de sorte que la portion annulaire du matelas 15 entourant l'orifice 23, et séparant de ce fait l'ouverture 21 et l'évidement 22, soit aussi grande que possible. Ainsi, on s'assure que l'isolation thermique à cet endroit est la plus performante possible.

La structure d'accrochage 19 est destinée à coopérer avec un lien formant un moyen de retenue, en l'espèce le fil frein 24. Le fil frein 24 est associé à un bouton de retenue 25. Ainsi, lors de la mise en place du matelas 15, le fil frein 24 est introduit à travers l'oeillet 20 de la structure d'accrochage 19. Une fois le fil frein 24 correctement positionné dans l'oeillet 20, les extrémités du fil frein 24 sont introduites à travers deux orifices correspondants (non visibles) du bouton de retenue 25. Le fil frein est ensuite torsadé de manière à assurer le serrage et l'appui du bouton de retenue 25. La fixation du fil frein 24 est sécurisée en noyant les extrémités du fil frein 24, par exemple dans du silicone. L'évidement 22 est ensuite recouvert par un chapeau isolant 26.

Conformément à l'invention, un ou plusieurs passages d'air sont prévus entre la face avant de l'IFS, constituée dans l'exemple par la peau externe 12, et la face arrière de l'IFS, constituée dans l'exemple par la peau interne 11. De tels passages d'air sont prévus à proximité immédiate de chacun des systèmes de fixation représentés sur les figures 2 et 3.

Dans l'exemple de la figure 2, l'invention est mise en oeuvre grâce à un trou traversant 27 prévu dans la structure d'accrochage 19 et formant un conduit 28. Le conduit 28 débouche au niveau d'une extrémité inférieure 29 de la structure d'accrochage 19. La structure d'accrochage 19 traverse la peau interne 11 de l'IFS 5, de sorte que l'extrémité inférieure 29 de la structure d'accrochage 19 se situe au sein de l'âme alvéolaire 13, entre la peau interne 11 et la peau externe 12. Ainsi, le conduit 28 débouche directement au sein de l'âme alvéolaire 13 et se trouve en communication fluidique avec la veine 6, par l'intermédiaire des perforations acoustiques 14 de la peau externe 12 de l'IFS.

A son autre extrémité, le conduit 28 débouche dans l'espace délimité par la peau interne 11 et l'évidement 21, dans l'exemple par l'intermédiaire d'un perçage transversal traversant, situé à proximité d'une extrémité supérieure de la structure d'accrochage 19. Avantageusement, comme représenté sur les figures 2 et 3, ce perçage transversal est confondu avec l'oeillet 20.

Grâce à la configuration de la structure d'accrochage 19 décrite ci-dessus, et plus particulièrement grâce au conduit interne 28 qu'elle comporte, l'air frais provenant de la veine 6 et pénétrant dans l'âme alvéolaire 13 via les perforations acoustiques 14 (voir flèches 30) peut traverser la peau interne 11 de l'IFS 5 (voir flèche 32). Ainsi, grâce à l'invention, de l'air frais en provenance de la veine 6 est amené à proximité immédiate de chaque point d'attache du matelas 15, dans l'espace situé autour de l'embase 18 de fixation. Il est à noter que l'air frais circule également entre les différentes alvéoles de l'âme alvéolaire 13, par l'intermédiaire de trous de drainage existant entre les alvéoles (voir flèches 31). Cette amenée d'air frais permet de refroidir correctement l'environnement de chacun des points d'attaches du matelas 15 de protection thermique.

Alternativement ou en complément, on pourra prévoir un ou plusieurs passages d'air non pas au sein de l'embase 18 de fixation, mais directement dans la peau interne 11 de l'IFS. On notera que le mode d'emploi sans passages d'air au sein de l'embase 18 ne fait pas partie de l'invention. De tels passages d'air sont représentés sur la figure 3. Dans l'exemple de la figure 3, on a ainsi prévu deux trous 33 traversant la peau interne 11, disposés de part et d'autre de l'embase 18 de fixation. Comme pour le conduit 28 de la figure 2, les trous 33 débouchent d'un côté dans l'âme alvéolaire 13, et, du côté opposé, dans l'espace délimité par la peau interne 11 et l'évidement 21. De même que le conduit interne 28 de la structure d'accrochage, les trous 33 pratiqués dans la peau interne 11 de l'IFS 5 constituent une amenée d'air frais en provenance de la veine 6 (voir flèches 34).

On notera que les deux modes de réalisation décrits ci-dessus sont mis en oeuvre de manière combinée dans l'exemple de la figure 3, mais que ces modes de réalisation peuvent naturellement être mis en oeuvre de manière séparée. Ainsi, le deuxième mode de réalisation, consistant en des passages d'air pratiqués directement dans la peau interne 11, sera particulièrement intéressant pour améliorer *a posteriori* le refroidissement d'une structure interne fixe conforme à l'art antérieur : il suffira en effet de procéder au perçage de la peau interne de cette structure, sans qu'il soit nécessaire de modifier le système d'attache de la protection thermique existante.

Bien que l'invention ait été décrite avec un exemple particulier de réalisation, il est bien évident qu'elle n'y est nullement limitée et qu'elle est définie que par les revendications ci-jointes.

## Revendications

1. Ensemble d'une structure interne fixe (5) d'une nacelle (3) de turboréacteur (2) et d'une protection thermique (10), ladite structure (5) comportant une face interne, sur laquelle est rapportée la protection thermique (10), et une face externe, constituant une portion de la surface interne d'une veine de flux froid, la structure interne (5) comportant une peau interne (11) et une peau externe (12) pourvue de perforations acoustiques (14), la peau interne (11) et la peau externe (12) encadrant une âme alvéolaire (13), l'ensemble étant **caractérisé en ce qu'**au moins un canal (28) met en communication fluidique la face interne et la face externe de la structure (5), **en ce que** la protection thermique (10) est fixée à la structure interne fixe (5) par au moins un dispositif de fixation comprenant une embase (18) de fixation solidaire de la structure interne fixe (5), ladite embase (18) de fixation comportant un conduit interne (28) traversant la peau interne (11) et formant ledit canal, l'ensemble étant en outre **caractérisé en ce que** l'embase (18) de fixation comporte une structure d'accrochage (19) d'un lien de retenue (24) de la protection thermique (10), la structure d'accrochage (19) comportant un trou traversant (27) formant le conduit interne (28).

2. Ensemble selon la revendication 1, dans lequel la protection thermique (10) est rapportée sur la peau interne (11) de la structure interne fixe (5), au moins un trou traversant (33) étant ménagé dans la peau interne (11).

3. Ensemble selon l'une des revendications précédentes, dans lequel le trou traversant (27) débouche dans un deuxième trou traversant formant un passant (20) pour le lien de retenue (24).

4. Nacelle d'un turboréacteur d'aéronef, comportant un ensemble d'une structure interne fixe (5) et d'une protection thermique (10) conforme à l'une des revendications précédentes.

5. Ensemble propulsif d'aéronef comportant une nacelle conforme à la revendication précédente et un turboréacteur logé dans la nacelle.

## Patentansprüche

1. Einheit einer fixen inneren Struktur (5) einer Gondel (3) eines Turbostrahltriebwerks (2) und eines thermischen Schutzes (10), wobei die Struktur (5) eine innere Seite umfasst, auf der der thermische Schutz (10) montiert ist, und eine äußere Seite, die einen Abschnitt der inneren Oberfläche einer Kaltflussleitung darstellt, wobei die innere Struktur (5) eine innere Haut (11) und eine äußere Haut (12) umfasst, die mit akustischen Perforationen (14) versehen ist, wobei die innere (11) und die äußere Haut (12) einen Wabenkern (13) umfassen, wobei die Einheit **dadurch gekennzeichnet ist, dass** mindestens ein Kanal (28) die innere Seite und die äußere Seite der Struktur (5) in fluidische Kommunikation bringt, und dadurch, dass der thermische Schutz (10) an die fixe innere Struktur (5) durch mindestens eine Fixierungsvorrichtung fixiert ist, umfassend einen Fixierungssockel (18), der fest mit der fixen inneren Struktur (5) verbunden ist, wobei der Fixierungssockel (18) ein inneres Rohr (28) umfasst, das die innere Haut (11) durchquert und den Kanal bildet, wobei die Einheit außerdem **dadurch gekennzeichnet ist, dass** der Fixierungssockel (18) eine Befestigungsstruktur (19) einer Rückhalteverbindung (24) des thermischen Schutzes (10) umfasst, wobei die Befestigungsstruktur (19) ein Durchgangsloch (27) umfasst, das das innere Rohr (28) bildet.

2. Einheit nach Anspruch 1, wobei der thermische Schutz (10) auf der inneren Haut (11) der fixen inneren Struktur (5) montiert ist, wobei mindestens ein Durchgangsloch (33) in der inneren Haut (11) angebracht ist.

3. Einheit nach einem der vorhergehenden Ansprüche, wobei das Durchgangsloch (27) in ein zweites Durchgangsloch mündet, das eine Passage (20) für die Rückhalteverbindung (24) bildet.

4. Gondel eines Turbostrahltriebwerks eines Flugzeugs, umfassend eine Einheit einer fixen inneren Struktur (5) und einen thermischen Schutz (10) nach einem der vorhergehenden Ansprüche.

5. Antriebseinheit eines Flugzeugs, umfassend ein Turbostrahltriebwerk, das in einer Gondel nach dem vorhergehenden Anspruch aufgenommen ist, und ein Turbostrahltriebwerk, das in der Gondel aufgenommen ist.

## Claims

1. An assembly of an inner fixed structure (5) of a nacelle (3) of a turbojet engine (2) and of a thermal protection (10), said structure (5) including an inner face, on which the thermal protection is mounted (10), and an outer face, constituting a portion of the inner surface of a cold flow path, the inner structure (5) including an inner skin (11) and an outer skin (12) provided with acoustic perforations (14), the inner skin (11) and the outer skin (12) framing a cellular core (13), the assembly being **characterized in that** at least one channel (28) places the inner face and the outer face of the structure (5) in fluid communication, **in that** the thermal protection (10) is fastened to the inner fixed structure (5) by at least one fastening device comprising a fastening base (18) secured to the inner fixed structure (5), said fastening base (18) including an inner pipe (28) passing through the inner skin (11) and forming said channel, the assembly being further **characterized in that** the fastening base (18) includes a hooking structure (19) of a retaining link (24) of the thermal protection (10), the hooking structure (19) including a through-hole (27) forming the inner pipe (28).

2. The assembly according to claim 1, wherein the thermal protection (10) is mounted on to the inner skin (11) of the inner fixed structure (5), at least one through-hole (33) being formed in the inner skin (11).

3. The assembly according to any of the preceding claims, wherein the through-hole (27) opens into a second through-hole forming a basic frame (20) for the retaining link (24).

4. A nacelle of an aircraft turbojet engine, including an assembly of an inner fixed structure (5) and a thermal protection (10) in accordance with any of the preceding claims.

5. An aircraft propulsion unit including a nacelle in accordance with the preceding claim and a turbojet engine housed in the nacelle.
